# EUROPÄISCHE PATENTANMELDUNG

(11) **EP 2 189 961 A1**
(43) Veröffentlichungstag der Anmeldung: **26.05.2010**
(21) Anmeldenummer: 08019720.5
(22) Anmeldetag: 12.11.2008
(51) Int. Cl.: G09B 7/00

(54) **Koordination und/oder Durchführung von Unterrichtzwecken dienenden Lehreinheiten mit optischen und/oder akustischen Lehrinhalten**

(71) Anmelder: Vodafone Holding GmbH, 40027 Düsseldorf (DE)
(72) Erfinder: Holzberg, Jan, 40213 Düsseldorf (DE); Altareva, Evgniya, Dr., 40237 Düsseldorf (DE); Steil, Melissa, 40476 Düsseldorf (DE)
(74) Vertreter: Ring & Weisbrodt

(57) **Zusammenfassung**

Die vorliegende Erfindung betrifft ein Verfahren zur zumindest teilautomatlsierten Koordination und/oder Durchführung von Unterrichtszwecken dienenden Lehreinheiten (3, 3', 3") mit optischen und/oder akustischen Lehrinhalten, wobei eine Lehreinheit (3, 3'. 3") In einem Dialog zwischen einer Lehrereinrichtung (1) und wenigstens einer Schülereinrichtung (4, 5, 6) über ein Mobilfunknetz (7), insbesondere ein Mobilfunknetz (7) gemäß einem GSM-, GPRS- und/oder UMTS-Funknetzstandard, erfolgt, dabei sendet die Lehrerelnrichtung (1) zumindest einen Teil einer Lehreinhelt (3, 3', 3") In Abhängigkeit wenigstens eines Anforderungskriteriums über das Mobilfunknetz (7) an wenigstens eine in dem Mobllfunknetz (7) betreibbare Schülereinrichtung (4, 5, 6), empfängt eine in dem Mobilfunknetz (7) betreibbare Schülereinrichtung (4, 5, 6) zumindest einen Tell einer Lehreinheit (3, 3'. 3") über das Mobilfunknetz (7) und führt diesen aus, wobei die inhalte der empfangenen Lehreinheit (3, 3', 3") von der Schülereinrichtung (4, 5, 6) in akustischer und/oder optischer Form wiedergegeben werden und Antworten und/oder Auswertungen von Antworten auf Fragen bezogen auf zu vermitteinde Lehrinhalte der Lehreinheit (3, 3', 3") über das Mobilfunknetz (7) an die Lehrereinrichtung (1) gesendet werden, und empfängt die Lehrereinrichtung (1) Antworten und/oder Auswertungen von Antworten auf Fragen bezogen auf zu vermitteinde Lehrinhalte einer Lehreinheit (3, 3', 3").

Gegenstand der vorliegenden Erfindung ist ferner ein Endgerät (4, 5, 6) zur Nutzung in einem Mobilfunknetz (7), insbesondere einem Mobilfunknetz (7) gemäß einem GSM-, GPRS- und/oder UMTS-Funknetzstandard, welches ausgebildet und/oder eingerichtet ist ein erfindungsgemäßes Verfahren zumindest teilweise auszuführen.

## Beschreibung

Die vorliegende Erfindung betrifft ein Verfahren zur zumindest teilautomatisierten Koordination und/oder Durchführung von Unterrichtszwecken dienenden Lehreinheiten mit optischen und/oder akustischen Lehrinhalten, wobei eine Lehreinheit in einem Dialog zwischen einer Lehrereinrichtung und wenigstens einer Schülereinrlchtung erfolgt.

Gegenstand der vorliegenden Erfindung ist ferner ein Endgerät zur Nutzung in einem Mobitfunknetz, insbesondere einem Mobilfunknetz gemäß einem GSM-, GPRS- und/oder UMTS-Funknatzstandard, welches ausgebildet und/oder eingerichtet ist ein erfindungsgemäßes Verfahren zumindest teilweise auszuführen.

Im Stand der Technik ist es bekannt, Unterrichtszwecken dienende Lehreinheiten In Form von Anwendungsprogrammen automatisiert seitens einer Rechenanlage - in der Regel einem sogenannten PC (PC: Personal Computer) oder dergleichen Rechenanlage - ausführen zu lassen. Dabei wird die Rechenanlage (PC) als Lehrereinrlchtung, insbesondere zur Bereitstellung von Lehreinheiten mit optischen und/oder akustischen Lehrinhalten und zur Koordination der Wiedergabe der optischen und/oder akustischen Lehrinhalte der Lehreinheiten, und gleichzeitig als Schülereinnchtung, insbesondere zur Wiedergabe von optischen und/oder akustischen Lehrinhalten der Lehreinheiten und zur Erfassung von Steuer- und/oder Antworteingaben für den Lehreinheltsdialog, eingesetzt beziehungsweise verwendet. Auch ist es bekannt, die Lehrereinrichtung seitens einer über das internet erreichbaren Rechenanlage (Server) zu realisieren. Die Schülerelnrichtungen werden dabei von einer mit dem internet verbindbaren Rechenanlage (PC) ausgebildet. Der Lehreinheltsdialog zwischen der Lehrereinrichtung und einer Schülereinrichtung erfolgt über das Internet.

Die bisher bekannten Lösungen kommen dem fortwährend gegebenen Mobilitätsbedürfnis und den sich daraus ergebenden besonderen Anforderungen an die Lehreinhelten, insbesondere hinsichtlich Individueller Möglichkeiten von Schülern, wie Aufenthaltsort, zeitlichen Vorgaben, Gruppenzugehörigkelten und/oder dergleichen, nicht ausreichend nach.

Vor diesem Hintergrund liegt der vorliegenden Erfindung die Aufgabe zugrunde, die Koordination und/oder Durchführung von Unterrichtszwecken dienenden Lehreinheiten mit optischen und/oder akustischen Lehrinhalten, wobei eine Lehreinheit in einem Dialog zwischen einer Lehrereinrichtung und wenigstens einer Schülerelnrlchtung erfolgt, zu verbessern, Insbesondere um dem fortwährend gegebenen Mobilitätsbedürfnls und den sich daraus ergebenden besonderen Anforderungen an die Lehreinheiten nachkommen zu können.

Zur technischen Lösung dieser Aufgabe wird mit der vorliegenden Erfindung ein Verfahren zur zumindest teilautomatlsierten Koordination und/oder Durchführung von Unterrichtszwecken dienenden Lehreinhelten mit optischen und/oder akustischen Lehrinhalten vorgeschlagen, wobei eine Lehreinheit in einem Dialog zwischen einer Lehrereinrichtung und wenigstens einer Schülereinrichtung über ein Mobilfunknetz, Insbesondere ein Mobllfunknetz gemäß einem GSM-, GPRS-und/oder UMTS-Funknatzstanderd, erfolgt, dabei sendet die Lehrereinrichtung zumindest einen Teil einer Lehrelnhelt in Abhänglgkeit wenigstens eines Anforderungskriterlums über das Mobllfunknetz an wenigstens eine in dem Mobilfunknetz betrelbbare Schülereinrichtung, empfängt eine in dem Mobilfunknetz betreibbare Schülereinrichtung zumindest einen Teil einer Lehreinhelt über das Mobllfunknetz und führt diesen aus, wobei die Inhalte der empfangenen Lehreinhelt von der Schülerelnrichtung In akustischer und/oder optischer Form wiedergegeben werden und Antworten und/oder Auswertungen von Antworten auf Fragen bezogen auf zu vermittelnde Lehrinhalte der Lehrelnheit über das Mobilfunknetz an die Lehrereinrichtung gesendet werden, und empfängt die Lehrerelmrichtung Antworten und/oder Auswertungen von Antworten auf Fragen bezogen auf zu vermittelnde Lehrinhalte einer Lehrelnheit.

Die erfindungsgemäße Ausgestaltung ermöglicht vorteilhafterweise eine Koordination und/oder Durchführung von Unterrichtszwecken dienenden Lehreinheiten mit optischen und/oder akustischen Lehrinhalten, bei dem Schüler als Schülerelnrichtung für die Lehreinhelt ein in dem Mobilfunknetz betrelbbares Endgerät, vorzugsweise in Form eines Mobilfunktelefons, nutzen können, so dass die Mobilltät der Nutzbarkeit der Lehreinhelten für Schüler verbessert ist. Darüber hinaus ermöglich die erfindungsgemäße Ausgestaltung durch die Möglichkeit der Durchführung des Lehreinheltadialogs zwischen der Lehrereinrichtung und wenigstens einer Schülereinrlchtung über das Mobilfunknetz vorteühafterwelse eine zleigerichtete und individualisierte Lehreinheltenauswahl durch die Lehrerelnrichtung und/oder die Schüler. So kann im Rahmen einer Lehreinhelt vorteilhafterwelse der aktuelle Aufenthaltsort des Schülers beziehungsweise der Schülereinrichtung, welcher vorteilafterweise über beziehungsweise aus der Erreichbarkeit der Schülereinrichtung in dem Mobilfunknetz ermittelt wird, Berücksichtlgung finden, vorteilhafterwelse hinsichtlich des zu vermitteinden Lehrinhalts der Lehreinheit.

In einer weiteren Ausgestaltung der Erfindung wird das Anforderungskriterlum durch eine seitens der Schülereinrichtung erfolgende Aktivierungseingabe erzeugt, vorzugsweise im Rahmen des Antwortens und/oder Auswertens von Antworten auf Fragen bezogen auf zu vermittelnde Lehrinhalte einer Lehreinhelt. Erfindungsgemäß wird so ein Fortschritt beim Durcharbeiten der Lehreinheit entsprechend dem individuellen Bedürfnis, Mögllchkelten und/oder Fähigkeiten ermöglicht. Die Aktivierungselngabe ist vorteilhafterweise eine Eingabe, mit welcher der Schüler weiteren Lerninhalt zu einer Lehrreinheit aktiv anfordert. Ferner ist eine erfindungagemäße Aktivierungseingabe vorteilhafterwelse eine Eingabe, mit welcher der Schüler Antworten auf Fragen bezogen auf zu vermittelnde Lehrinhalte einer Lehreinhelt abgibt und/oder Auswertungen von Antworten auf Fragen bezogen auf zu vermittelnde Lehrinhalte einer Lehreinheit an die Lehrerelnrichtung sendet.

Gemäß einem weiteren vorteilhaften Vorschlag der Erfindung erfolgt seitens der Lehrereinrichtung zumindest tellweise eine Auswertung von von einer Schülereinrichtung empfangener Antworten und/oder Auswertungen von Antworten auf Fragen bezogen auf zu vermittelnde Lehrinhalte einer Lehreinhelt. Erfindungsgemäß wird dadurch die Möglichkeit eingeräumt, dass Antworten und/oder Auswertungen von Antworten auf Fragen bezogen auf zu vermitteinde Lehrinhalte einer Lehreinheit erst seitens der Lehrereinrichtung ausgewertet werden. Dadurch, dass die Schülerelnrlchtungen Ihre Antworten und/oder Auswertungen von Antworten auf Fragen bezogen auf zu vermittelnde Lehrinhalte einer Lehreinheit zur Auswertung an die Lehrereinrlchtung senden, wird vorteilhafterwelse Manipulationen der Auswertung entgegengetreten. Vorteilhafterwelse erfolgt die Übertragung der Antworten und/oder Auswertungen von Antworten auf Fragen bezogen auf zu vermittelnde Lehrinhalte einer Lehreinhelt von einer Schülereinnchtung an die Lehrereinrichtung in kodierter beziehungsweise verschlüsselter Form.

Vorteilhafterweise wird zumindest das Ergebnis der Auswertung der jewelligen Schülereinrichtung zugeordnet. Eine besonders bevorzugte Ausgestaltung der Erfindung sieht vor, dass die Zuordnung der Auswertung zu der jewelligen Schülereinrichtung über eine der Schülerelnrichtung im Mobilfunknetz eindeutig zugeordneten Kennung, vorzugsweise der MSISDN und/oder der IMSI, erfolgt. Erfindungsgemäß sind so Unterrichtszwecken dienende Lehreinhelten vortellhafterweise eindeutig authentlfiziert über das Mobilfunknetz ermöglicht. Vorteilhafterwelse können Schüler so mobil authentifizierten Prüfungssituationen bezogen auf zu vermittelnde Lehrinhalte von Lehreinheiten erfindungsgemäß ausgesetzt werden.

Gemäß einem weiteren besonders vorteilhaften Vorschlag der Erfindung sind Schülerelnrlchtungen seitens der Lehrerainrichtung zu einer Gruppe gruppierbar, so dass vorteilhafterweise mehrere, jeweils eine Schülereinrichtung nutzende Schüler quasi zu einer Klasse, einem Kurs oder dergleichen zusammenfassbar sind. Die Schüler können sich dabei erfindungsgemäß an weltestgehend beliebigen und unterschiedlichen Orten aufhalten, die Errelchbarkeit der Schülereinrichtung in und/oder über das Mobilfunknetz für die erfindungsgemäße Verfahrensführung voraussetzend, zumindest für den Lehreinheitsdialog.

In einer weiteren besonders vorteilhaften Ausgestaltung der Erfindung wird das Ergebnis von Auswertungen von Antworten und/oder Auswertungen von Antworten auf Fragen bezogen auf zu vermitteinde Lehrinhalte einer Lehreinhelt automatisch an eine Einrichtung zur Überwachung und/oder Überprüfung des Lehr- und/oder Lernfortschritts übermittelt, vorzugsweise über das Mobilfunknetz. Die Übermittlung erfolgt vorteilhafterwelse automatisch und/oder auf Anfrage, vorzugsweise im Zusammenhang mit einem Lehr- und/oder Lemfortschrlttsnachweis gegenüber der Einrichtung zur Überwachung und/oder Überprüfung des Lehr- und/oder Lernfortschritts. Die Einrichtung zur Überwachung und/oder Überprüfung des Lehr- und/oder Lernfortschritts ist in einer bevorzugten Ausgestaltung der Erfindung vorteilhafterweise einer Schule, einer Universität oder dergleichen Lehreinrichtung zugeordnet beziehungsweise von dieser unterhalten. Erfindungsgemäß wird so durch beziehungsweise mit der Einrichtung zur Überwachung und/oder Überprüfung des Lehr- und/oder Lemfortschritts die Möglichkeit geschaffen, den Lehr- und/oder Lernfortschritt außerhalb der Lehrereinrichtung zu überprüfen und/oder nachzuweisen, vorzugsweise durch die Schüler selbst und/oder gegenüber entsprechenden Nachwelsinstitutlonen, wie Behörden oder derglelchen Institutionen.

Eine weitere besonders bevorzugte Ausgestaltung der Erfindung ist dadurch gekennzeichnet, dass die Einrichtung zur Überwachung und/oder Überprüfung des Lehr- und/oder Lernfortschritts über das Internet administrierbar ist, vorzugsweise über eine graphische Benutzerschnittetelle. Überprüfungen und/oder Nachweise von absolvierten Lehrelnheiten, dem Lernfortschritt und/oder erzielten Ergebnissen ist so vorteilhafterweise weiter verbessert. Dabei wird vorteilhafterweise hinsichtlich einer Befriedigung des Mobilitätsbedürfnisses der Nutzer, Insbesondere Schüler, Eltern von Schülern und/oder sonstigen Nachweislnstitutlonen, erfindungsgemäß eine Verbesserung erzielt. Schüler können mit der erfindungsgemäßen Elnrichtung zur Überwachung und/oder Überprüfung des Lehr- und/oder Lernfortschritts über das lnternet ihr erzieltes Ergebnis und/oder Ihren Lehr- und/oder Lernfortschrltts bezogen auf zu vermittelnde Lehrinhalte einer Lehreinhelt mit anderen Schülern und/oder absolut bezogen auf ein durchschnlttliche erzieltes Ergebnis einer bestimmten Auswahl von Schülern hinsichtlich des Lehr- und/oder Lernfortschritts vergleichen. Vorteilhafterweise ermöglicht die graphische Benutzerschnlttstelle der Einrichtung zur Überwachung und/oder Überprüfung des Lehr- und/oder Lernfortschritts seinen Nutzern umfangreiche statistische Auswertungen und/oder Darstellungen derselben.

Die Auswertung von Antworten auf Fragen bezogen auf zu vermittelnde Lehrinhalte einer Lehreinhelt erfolgt vorteilhafterweise durch wenigstens einen Vergleich der Antworten auf Fragen bezogen auf zu vermitteinde Lehrinhalte einer Lehreinheit mit Musterantworten auf Fragen bezogen auf zu vermitteinde Lehrinhalte der Lehreinheit. Die Lehreinheiten werden vorteilhafterweise seitens einer mit der Lehrereinrichtung verbindbaren und/oder seitens der Lehrereinrichtung vorhandenen Datenbank bereitgehalten.

Die Lehreinheiten werden vorteilhafterweise thematisch gruppiert und/oder in aufeinander abgestimmten Gruppierungen angeboten und/oder bereitgehalten. Die lehrereinrichtung bietet vorteilhafterwelse die Möglichkeit, Lehreinhelten entsprechend thematisch gruppiert und/oder aufeinander abgestimmt zusammenzustellen und/oder anzubieten. In einer vorteilhaften Ausgestaltung der Erfindung werden Lehreinheiten mit einer Zufallseinrichtung automatisch ausgewählt und Schülern angeboten.

Vorteilhafterwelse ist die Lehreinheit als Spiel ausgebildet, In welchem Schüler und/oder Schülergruppen zu Wettbewerbs- und/oder Unterhaltungszwecken miteinander beziehungsweise gegeneinander spielen.

Vorteilhafterweise ist die Lehreinheit in Form eines Frage-Antwort-Spiels ausgebildet, bei dem wenigstens ein Vergleich von abgegebenen Antworten auf Fragen bezogen auf zu vermittelnde Lehrinhalte einer Lehreinhelt mit Musterantworten auf Fragen bezogen auf zu vermittelnde Lehrinhalte der Lehreinheit erfolgt, wobei vorzugsweise mehrere Antworten auf eine Frage möglich sind, beispielsweise nach Art eines sogenannten Multiple-Choice.Tests.

Die Lehreinheit ist vortellhaftarwelse als ein mit einer Recheneinrlchtung der Schülerelnrichtung ausführbares Anwendungsprogramm realisiert, welches zumindest teilweise seitens der Im Mobilfunknetz betreibbaren Schülerelnrichtung ausgeführt wird.

Vorteilhafterweise ist die Lehreinheit als ein linguistische, physikalische, chemische und/oder biologische Lehrinhalte vermittelndes Anwendungsprogramm ausgebildet.

Eine weitere vorteilhafte Ausgestaltung der Erfindung sieht vor, dass die Lehreinhelt als ein Sprach- und/oder Sprechübungen als Lehrinhalte vermitteindes Anwendungsprogramm ausgebildet ist. Die Schülerelnrihtung und/oder die Lehrereinrichtung ist dabei vorteilhafterweise ausgebildet und/oder eingerichtet, Spracherkennungen und/oder Sprachsynthesen vorzunehmen, so dass beispielsweise Sprachen und/oder Vokabein in gesprochener Form lernbar sind.

Die Lehrerelnrichtung ist dabei vortellhafterwelse in der Lage Lerninhalte in natürlicher Sprache zu vermitteln. Die Schülereinrichtungen sind dabei vorteilhafterwelse in der Lage Antworten auf Fragen in natürllcher Sprache einzugeben, welche dann seitens der Schülerelnrichtung und/oder seitens der Lehrereinrichtung überprüft werden, vorteilhafterweise hinsichtlich der Aussprache, Sprechrhythmus, Betonung und dergleichen Parameter. Vorteilhafterweise erfolgen Wlederholungsübungen für entsprechende Lehreinhelten bezüglich der Spracheriernung.

In einer besonders bevorzugten Ausgestaltung der Erfindung ist die Schülereinrichtung ein in dem Mobilfunknetz betreibbares mobiles Endgerät, vorzugsweise ein Mobilfunktelefon. Anzeige- und/oder Eingabeeinheiten des Mobilfunktelefons, insbesondere Display und Lautsprecher sowie Tastatur und Mikrofon, bilden dabei vorteilhafterweise Anzeige- und/oder Eingabeeinhelten der Schütereinrichtung.

Vorteilhafterweise ist das erfindungsgemäße Endgerät zur Nutzung in einem Mobilfunknetz, insbesondere einem Mobilfunknetz gemäß einem GSM-, GPRS- und/oder UMTS-Funknetzstandard, ausgebildet und/oder eingerichtet ein erfindungsgemäßes Verfahren als Schülereinrlchtung zumindest teilweise auszuführen. Eine besonders bevorzugte Ausgestaltung der Erfindung sieht dazu vor, dass die Schülereinrfchtung von bzw. mit einem seitens des Endgerätes ausführbaren Anwendungsprogramm ausgebildet ist, welches das vorzugsweise mobile Endgerät zur erfindungsgemäßen Schülereinrtchtung funktionalisiert. Das Endgerät ist dabei vorteilhafterwelse weiterhin als in dem Mobilfunknetz betreibbares Endgerät nutzbar.

Weitere Einzelheiten, Merkmale und Vorteile der Erfindung werden nachfolgend anhand des In der Figur der Zeichnung dargestellten Ausführungsbeisplels der Erfindung näher erläutert. Dabei zeigt:

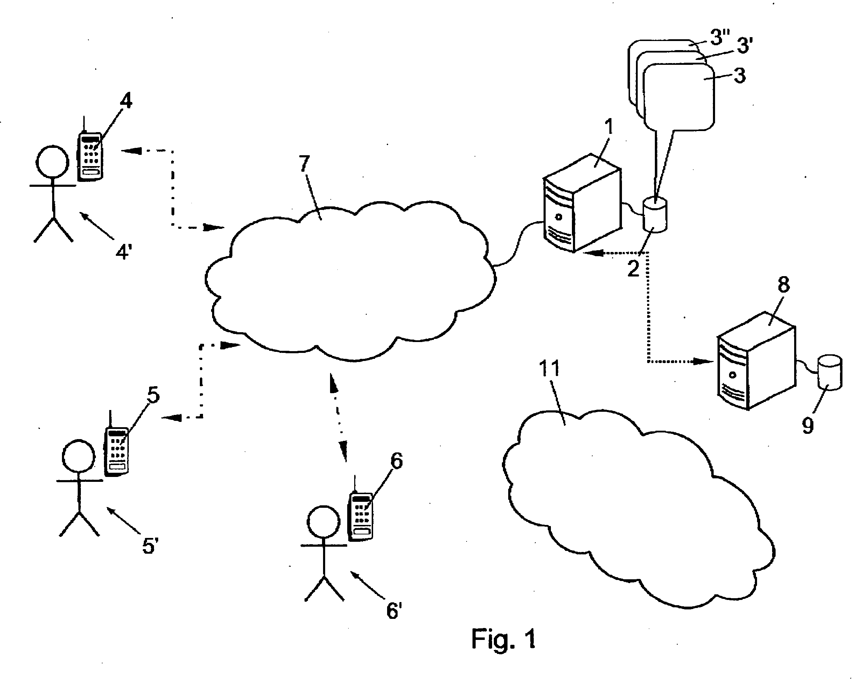

- Fig. 1: in einer schematischen Prinzipdarsteilung ein Ausführungsbeispiel einer erfindungsgemäßen Koordination und/oder Durchführung von Unterrichtszwecken dienenden Lehreinheiten.

Fig. 1 zeigt eine von einer Rechenanlage, vorliegend einem Server, ausgebildete beziehungsweise eingerichtete Lehrereinrichtung 1. Die Lehrereinrichtung 1 umfasst vorllegend eine Datenbank 2, welche Unterrichtszwecken dienende Lehreinheiten 3, 3' und 3" mit optischen und/oder akustischen Lehrinhalten bevorratet. Die Lehreinheiten 3, 3' und 3" sind vorliegend als seitens einer Schülerelnrichtung 4, 5 beziehungsweise 6 von entsprechenden Schülem 4', 5' beziehungsweise 6' ausführbare beziehungsweise zumindest teilweise ausführbare Anwendungsprogramme ausgebildet, welche die zu vermittelnden optischen und/oder akustischen Lehrinhalte der Lehreinheiten 3, 3' beziehungsweise 3" seitens entsprechender Anzeigeeinheiten der Schülereinrlchtungen 4, 5 beziehungsweise 6 in akustischer und/oder optischer Form entsprechend der jewelligen Lehrsituation signalisiert.

Die Schülerelnrichtungen 4, 5 beziehungsweise 6 der Schüler 4', 5' beziehungsweise 6' sind vorliegend in einem Mobilfunknetz 7 gemäß einem GSM-, GPRS- und/oder UMTS-Funknetzstandard betreibbare Endgeräte 4, 5 beziehungsweise 6, vorliegend in Form eines Mobilfunktelefons 4, 5 beziehungsweise 6. Die Schülerelnrichtung 4, 5, 6 wird dabei seitens des in dem Mobilfunknetz betreibbaren mobilen Endgerätes 4, 5, 6 durch einen seitens des Endgerätes 4, 5 beziehungsweise 6 ausführbares Anwendungsprogramm ausgebildet, mit welchem optische und/oder akustische Lehrinhalte von Unterrichtszwecken dienenden Lehreinheiten 3, 3' beziehungsweise 3" seitens des Endgerätes 4, 5 beziehungsweise 6 in akustischer und/oder optischer Form wiedergebbar sind. Der Betrieb der Endgeräte beziehungsweise Schülereinrichtungen 4, 5 und 6 in dem Mobilfunknetz 7 ist in Figur 1 symbolisch durch die strichpunktiert eingezeichneten Doppelpfeile zwischen den jeweiligen Endgeräten 4, 5 beziehungsweise 6 und dem Mobilfunknetz 7 dargestellt.

Die Lehrereinrichtung 1 ist bei dem in Figur 1 dargestellten Ausführungsbelspiel Bestandteil des Mobilfunknetzes 7. In einer weiteren vorteilhaften Ausgestaltung der Erfindung ist die Lehrereinrlchtung 1 über das Mobilfunknetz 7 für die Schülereinrichtungen 4, 5 beziehungsweise 6 erreichbar, wozu die Lehrereinrichtung 1 mit dem Mobilfunknetz 7 verbindbar ist.

Im Rahmen einer erfindungsgemäßen, zumindest tellautomatisiert ablaufenden Koordination und/oder Durchführung von Unterrichtszwecken dienenden Lehreinheiten erfolgt eine Lehreinheit in einem Dialog zwischen der Lehrereinrichtung 1 und wenigstens einer der Schülereinrichtungen 4, 5 beziehungsweise 6 der Schüler 4', 5' beziehungsweise 6'. Der Dialog erfolgt dabei vorliegend über das Mobilfunknetz 7. Die erfindungsgemäße Dialogführung zwischen der Lehrereinrichtung 1 und wenigstens einer der Schülereinrichtungen 4, 5 beziehungsweise 6 ist so vortellhafterweise über die seitens des Mobilfunknetzes gegebenen Authentisierungsfunktionalitäten vorteilhafterweise gesichert und hinsichtlich der Schüleridentität gesichert und vertrauensvoll durchführbar, was insbesondere Im Hinblick auf nachprüfbare und insbesondere örtlich anerkannte Leistungsnachweise bezüglich zu vermittelnder Lehrinhalte beiträgt und diese vortellhafterwelse besonders einfach realisiert. Vorliegend erfolgt die Authentifizierung der Schüler 4', 5' beziehungsweise 6' beziehungsweise deren Schülereinrichtung 4, 5 beziehungsweise 6 über die dem die Schülereinrichtung 4, 5, 6 realisierenden Endgerät eindeutig zugeordnete MSISDN und/oder IMSI im Mobilfunknetz 7. Die MSISDN und/oder IMSI Im Mobilfunknetz 7 ist dem Schüler 4', 5' und 6' beziehungsweise dessen Endgerät 4, 5 und 6 von dem Mobilfunknetzbetreiber des Mobilfunknetzes 7 zur Verfügung gestellt, in der Regel über ein mit dem entsprechenden Endgerät 4, 5 beziehungsweise 6 genutztes beziehungsweise nutzbares Mobilfunkteilnehmeridentifikationsmodul (SIM: Subscriber Identification Module).

Im Rahmen des Dialogs zwischen der Lehrereinrichtung 1 und wenigstens einer Schülereinrichtung 4, 5 beziehungsweise 6 sendet die Lehrereinrichtung 1 zunächst zumindest einen Teil einer Lehreinheit 3, 3' beziehungsweise 3" in Abhängigkeit wenigstens eines Anforderungskriterlums über das Mobilfunknetz 7 an die jeweilige Schülereindchtung 4, 5 beziehungsweise 6. Das Ariforderungskritedum kann dabei entweder automatisiert seitens der Lehrereinrichtung 1 ausgelöst werden, beispleiswelse im Rahmen eines Unterrichtsplans zu bestimmten und/oder vorgebbaren Unterrichtszeiten oder aber durch entsprechende Anforderung von einem Schüler 4', 5' beziehungsweise 6' durch entsprechende Aktlvierungsanforderungselngabe seitens der jeweiligen Schülereinrlchtung 4, 5 beziehungsweise 6. Eine entsprechende Anforderungselngabe kann dabei auch durch Beantwortung von Fragen und/oder Erfüllung von Aufgaben Im Rahmen einer Lehreinheit 3, 3' beziehungsweise 3" erfolgen beziehungsweise erzeugt werden, wobei letztere dann das Anforderungskriterium realisiert. Die an dem Dialog beteiligte Schülereinrichtung beziehungsweise beteiligten Schülereinrichtungen empfangen im Rahmen des Dialogs zumindest einen Teil einer Lehreinheit 3, 3' beziehungsweise 3" über das Mobilfunknetz 7. Zumindest der empfangene Teil einer Lehreinheit 3, 3' beziehungsweise 3" wird dann seitens des die Schülereinrichtung 4, 5 beziehungsweise 6 realisierenden Endgerätes 4, 5 beziehungsweise 6 ausbeziehungsweise durchgeführt, wobei die inhalte der empfangenen Lehreinhelt 3, 3' beziehungsweise 3" In akustischer und/oder optischer Form wiedergegeben werden. Ferner werden im Rahmen des Dialogs Antworten und/oder Auswertungen von Antworten auf Frage bezogen auf zu vermitteinde Lehrinhalte der Lehreinheiten 3, 3' beziehungsweise 3" von der jeweiligen realisierten Schülereinrichtung 4, 5 beziehungsweise 6 über das Mobilfunknetz 7 an die Lehrereinrichtung 1 gesendet. Seitens der Lehrereinrichtung 1 werden dann empfangene Antworten und/oder Auswertungen von Antworten auf Fragen bezogen auf zu vermitteinde Lehrinhalte einer Lehreinheit 3, 3' beziehungsweise 3" ausgewertet. Die Auswertung der zu vermitteinden Lehrinhalte einer Lehreinheit 3,3' beziehungsweise 3" werden dann seitens der Lehrereinrlchtung 1 über die MSISDN und/oder IMSI des Jeweiligen Endgerätes 4, 5 beziehungsweise 6 beziehungsweise Schülers 4', 5' beziehungsweise 6' eindeutig zugeordnet.

Vortellhafterweise ist die Zuordnung zur Überwachung und/oder Überprüfung des Lehr- und/oder Lernfortschritts eines Schülers 4', 5' beziehungsweise 6' nutzbar. Hierzu ist erfindungsgemäß vorteilhafterweise eine Einrichtung 8 zur Überwachung und/oder Überprüfung des Lehr- und/oder Lernfortschritts vorgesehen, welche mit der Lehrereinrichtung 1 verbindbar ist, vorliegend vorzugsweise über das Mobilfunknetz 7. Eine entsprechende Kommunlkationsverbindung zwischen der Lehrereinrichtung 1 und der Einrichtung 8 zur Überwachung und/oder Überprüfung des Lehr- und/oder Lernfortschritts ist in Figur 1 symbolisch durch den gestrichelten Doppelpfeil dargestellt. Die Einrichtung 8 zur Überwachung und/oder Überprüfung des Lehr- und/oder Lernfortschritts umfasst vortiegend eine Rechenanlage (Server), welche eine Datenbank 9 unterhält und/oder verwaltet. Die Einrichtung 8 umfasst dabei vorteilhafterweise eine graphische Benutzerschnittstelle 10, welche vorliegend in Form einer sogenannten Website und/oder Portalseite, welche im Internet 11 erreichbar und/oder nutzbar ist, realisiert. Über die graphische Benutzerschnittsteile 10 im Internet 11 der Einrichtung 8 zur Überwachung und/oder Überprüfung des Lehr- und/oder Lernfortschritts können so zum einen Schüler 4', 5' beziehungsweise 6' lhre erzielten Ergebnisse anschauen, verwalten und/oder mit anderen Schülern und/oder Schülergruppen vergleichen. Darüber hinaus können Schüler 4', 5' beziehungsweise 6' entsprechend erbrachte Leistungsnachweise durch Absolvieren von Lehreinheiten beziehungsweise Teilen von Lehreinheiten gegenüber dritten Institutionen, beispielsweise Schulen.

Universitäten, Behörden, Arbeltgebern oder dergleichen, automatisiert authentifiziert nachweisen Insbesondere ohne dass entsprechende Behördengänge und/oder Nachweiszertlfikate aufwändig erstellt und/oder beigebracht werden müssen.

Das In der Figur der Zelchnung dargestellte und die in Zusammenhang mit dieser beschriebenen Ausführungsbeispiel der Erfindung dienen lediglich der Erläuterung der Erfindung und sind für diese nicht beschränkend.

### Bezunszeichenliste,

- 1: Lehrereinrichtung
- 2: Datenbank (Lehrereinrichtung (1))
- 3: Lehreinheit
- 3': Lehreinheit
- 3": Lehreinheit
- 4: Schülereinrichtung
- 4': Schüler (Schulelnrichtung (4))
- 5: Schütereinnchtung
- 5': Schüler,(Schülereinrlchtung (5))
- 6: Schülereinrichtung
- 6': Schüler (Schülereinrichtung (6))
- 7: Mobilfunknetz
- 8: Einrichtung zur Überwachung und/oder Überprüfung eines Lehr- und/oder Lernfortschritts
- 9: Datenbank (Einrichtung zur Überwachung und/oder Überprüfung eines Lehr- und/oder Lernfortschritts (8))
- 10: Schnittstelle/Website (Einrichtung zur Überwachung und/oder Überprüfung eines Lehr- und/oder Lernfortschritts (8))
- 11: Internet

## Patentansprüche

1. Verfahren zur zumindest teilautomatisierten Koordination und/oder Durchführung von Unterrichtszwecken dienenden Lehreinheiten (3, 3', 3") mit optischen und/oder akustischen Lehrinhalten,
wobei eine Lehreinheit (3, 3', 3") In einem Dialog zwischen einer Lehrereinrichtung (1) und wenigstens einer Schülerelnrichtung (4, 5, 6) über ein Mobilfunknetz (7), insbesondere ein Mobilfunknetz (7) gemäß einem GSM-, GPRS- und/oder UMTS-Funknetzstandard, erfolgt,
dabei
sendet die Lehrerelnrichtung (1) zumindest einen Teil einer Lehreinheit (3, 3', 3") in Abhängigkeit wenigstens eines Anforderungskrtterlums über das Mobilfunknetz (7) an wenigstens eine in dem Mobilfunknetz (7) betreibbare Schütereinrichtung (4, 5, 6),
empfängt eine In dem Mobilfunknetz (7) betreibbare Schülereinrichtung (4, 5, 6) zumindest einen Tell einer Lehreinheit (3, 3', 3") über das Mobilfunknetz (7) und führt diesen aus, wobei die Inhalte der empfangenen Lehreinheit (3, 3', 3") von der Schülereinrlchtung (4, 5, 6) In akustischer und/oder optischer Form wiedergegeben werden und Antworten und/oder Auswertungen von Antworten auf Fragen bezogen auf zu vermitteinde Lehrinhalte der Lehrelnheit (3, 3', 3") über das Mobilfunknetz (7) an die Lehrereinrichtung (1) gesendet werden, und
empfängt die Lehrerelnrichtung (1) Antworten und/oder Auswertungen von Antworten auf Fragen bezogen auf zu vermitteinde Lehrinhalte einer Lehreinheit (3, 3', 3").

2. Verfahren nach Anspruch 1, **dadurch gekennzeichnet, dass** das Anforderungskriterlum durch eine seitens der Schülereinrichtung (4, 5, 6) erfolgende Aktivierungseingabe erzeugt wird, vorzugsweise im Rahmen des Antwortens und/oder Auswertens von Antworten auf Fragen bezogen auf zu vermitteinde Lehrinhalte einer Lehreinheit (3, 3', 3").

3. Verfahren nach Anspruch 1 oder Anspruch 2, **dadurch gekennzeichnet, dass** seitens der Lehrereinrichtung (1) zumindest teilweise eine Auswertung von von einer Schülereinrichtung (4, 5, 6) empfangener Antworten und/oder Auswertungen von Antworten auf Fragen bezogen auf zu vermitteinde Lehrinhalte einer Lehreinheit (3, 3', 3") erfolgt.

4. Verfahren nach Anspruch 3, **dadurch gekennzeichnet, dass** zumindest das Ergebnis der Auswertung der jeweiligen Schülereinrichtung (4, 5, 6) zugeordnet wird.

5. Verfahren nach Anspruch 4, **dadurch gekennzeichnet, dass** die Zuordnung der Auswertung zu der jeweiligen Schülereinrichtung (4, 5, 6) über eine der Schülereinrichtung (4, 5, 6) im Mobilfunknetz (7) eindeutig zugeordneten Kennung, vorzugsweise der MSISDN und/oder der IMSI, erfolgt,

6. Verfahren nach einem der Ansprüche 1 bis 5, **dadurch gekennzeichnet, dass** das Ergebnis von Auswertungen von Antworten und/oder Auswertungen von Antworten auf Fragen bezogen auf zu vermittelnde Lehrinhalte einer Lehreinheit (3, 3'. 3") automatisch an eine Einrichtung (8) zur Überwachung und/oder Überprüfung des Lehr- und/oder Lernfortschritts übermittelt wird, vorzugsweise über das Mobilfunknetz (7).

7. Verfahren nach Anspruch 6. **dadurch gekennzeichnet, dass** die Einrichtung (8) zur Überwachung und/oder Überprüfung des Lehr- und/oder Lernfortschritts über das Internet (11) administrierbar ist, vorzugsweise über eine graphische Benutzerschmittstelle (10).

8. Verfahren nach einem der Ansprüche 1 bis 7, **dadurch gekennzeichnet, dass** die Auswertung von Antworten auf Fragen bezogen auf zu vermitteinde Lehrinhalte einer Lehreinheit (3, 3', 3") durch wenigstens einen Vergleich der Antworten auf Fragen bezogen auf zu vermitteinde Lehrinhalte einer Lehreinhelt (3, 3', 3") mit Musterantworten auf Fragen bezogen auf zu vermittelnde Lehrinhalte der Lehreinheit (3, 3', 3") erfolgt.

9. Verfahren nach eine der Ansprüche 1 bis 8, **dadurch gekennzeichnet, dass** die Lehreinhelt (3, 3', 3") in Form eines Frage-Antwort-Spiels ausgebildet ist, bei dem wenigstens ein Vergleich von abgegebenen Antworten auf Fragen bezogen auf zu vermittelnde Lehrinhalte einer Lehreinheit (3, 3', 3") mit Musterantworten auf Fragen bezogen auf zu vermittelnde Lehrinhalte der Lehreinheit (3, 3', 3") erfolgt, wobei vorzugsweise mehrere Antworten auf eine Frage möglich sind.

10. Verfahren nach einem der Ansprüche 1 bis 9, **dadurch gekennzeichnet, dass** die Lehreinheit (3, 3', 3") ein mit einer Recheneinrichtung der Schülereinrichtung (4, 5, 6) ausführbares Anwendungsprogramm ist, welches zumindest teilweise seitens der im Mobilfunknetz (7) betreibbaren Schülereinrlchtung (4, 5, 6) ausgeführt wird.

11. Verfahren nach einem der Ansprüche 1 bis 10, **dadurch gekennzeichnet, dass** die Lehreinheit (3, 3', 3") als ein linguistische, physikalische, chemische und/oder biologische Lehrinhalte vermitteindes Anwendungsprogramm ausgebildet ist.

12. Verfahren nach einem der Ansprüche 1 bis 11, **dadurch gekennzeichnet, dass** die Lehreinheit (3, 3', 3") als ein Sprach- und/oder Sprechübungen als Lehrinhalte vermitteindes Anwendungsprogramm ausgebildet ist.

13. Verfahren nach einem der Ansprüche 1 bis 12, **dadurch gekennzeichnet, dass** die Schülereinrichtung (4, 5, 6) ein in dem Mobilfunknetz (7) betreibbares mobiles Endgerät ist (4, 5, 6), vorzugsweise ein Mobilfunktelefon (4, 5, 6) ist.

14. Endgerät (4, 5, 6) zur Nutzung in einem Mobilfunknetz (7), insbesondere einem Mobilfunknetz (7) gemäß einem GSM-, GPRS- und/oder UMTS-Funknetzstandard, **dadurch gekennzeichnet, dass** dieses ausgebildet und/oder eingerichtet ist ein Verfahren nach einem der Ansprüche 1 bis 13 als Schülereinrichtung (4, 5, 6) zumindest tellweise auszuführen.

15. Endgerät (4, 5, 6) nach Anspruch 14, **dadurch gekennzeichnet, dass** die Schülereinrichtung (4, 5, 6) von bzw. mit einem seitens des Endgerätes (4, 5, 6) ausführbaren Anwendungsprogramm ausgebildet ist.
